# EUROPÄISCHE PATENTSCHRIFT

(11) **EP 1 899 706 B1**
(45) Veröffentlichungstag und Bekanntmachung des Hinweises auf die Patenterteilung: **22.07.2009**
(21) Anmeldenummer: 06755088.9
(22) Anmeldetag: 09.05.2006
(51) Int. Cl.: G01N 15/06

(54) **VORRICHTUNG UND VERFAHREN ZUR ABGASMESSUNG MIT GELADENEN TEILCHEN**
DEVICE AND METHOD FOR MEASURING EXHAUST GAS WITH CHARGED PARTICLES
DISPOSITIF ET PROCEDE POUR MESURER DES GAZ D'ECHAPPEMENT AU MOYEN DE PARTICULES CHARGEES

(30) Priorität: 27.06.2005 DE 102005029834
(43) Veröffentlichungstag der Anmeldung: 19.03.2008
(73) Patentinhaber: ROBERT BOSCH GMBH, 70442 Stuttgart (DE)
(72) Erfinder: SCHAENZLIN, Katharina, 71208 Rottenburg-Obernau (DE); SCHITTENHELM, Henrik, 70182 Stuttgart (DE)
(86) Internationale Anmeldenummer: PCT/EP2006/062144
(87) Internationale Veröffentlichungsnummer: WO 2007/000368

(56) Entgegenhaltungen:
- WO-A2-03/034053
- DE-A1- 3 627 162
- DE-A1- 10 144 702
- DE-A1- 10 242 301
- DE-A1- 19 853 841
- GB-A- 1 105 604
- US-A- 3 700 330

## Beschreibung

Die Erfindung betrifft eine Vorrichtung zur Abgasmessung mit geladenen Teilchen, insbesondere bei einem Kraftfahrzeug, gemäß dem Oberbegriff des Anspruchs 1 und ein entsprechendes Verfahren gemäß dem Oberbegriff des Anspruchs 8.

### Stand der Technik

Vorrichtungen zur Abgasmessung mit geladenen Teilchen sind aus dem Stand der Technik bekannt. Sie werden in Verbindung mit Verbrennungsprozessen, insbesondere bei Kraftfahrzeugen, eingesetzt. Neben der Bestimmung chemischer Anteile, wie Sauerstoff oder Kohlendioxid, sind auch Messungen der Partikelkonzentration, der Abgasmenge oder der Abgasströmungsgeschwindigkeit von Bedeutung, um optimierend auf den Verbrennungsprozess einwirken zu können. Zudem ist es heute bekannt, bei Motoren eine externe Abgasrückführung einzusetzen, um die Emissionen von Stickoxiden zu reduzieren. Um die Parameter des Abgases möglichst genau bestimmen zu können, ist eine direkte Messung in der Abgasführung vorteilhaft. Der häufig verwendete Heißfilm-Luftmassenmesser kann hier jedoch nur sehr bedingt eingesetzt werden, da er Verschmutzungen durch Abgas nur begrenzt toleriert. Dabei ist zu beachten, dass eine Falschbestimmung der Abgasrückführungsrate um etwa 1%, bereits zu einer Fehlkalkulation der NOₓ- oder Rußemissionen von etwa 3% bis 5% führen kann. Zudem wird eine Realisierung des Heißfilm-Luftmassenmessers bei großen Volumendurchsätzen schwieriger. Ein guter Lösungsansatz für die Bestimmung von Partikeln im Abgasstrom wird in der DE 102 42 301 A1 aufgezeigt, wo eine lonisierungseinrichtung Partikel im Abgasstrom auflädt und diese aufgeladenen Partikel stromabwärts im Abgasstrom von einer Ladungsmesseinrichtung detektiert werden. Je mehr geladene Partikel detektiert werden, desto höher ist die Partikelkonzentration.

Weiterhin ist aus der DE 198 53 841 A1 eine Vorrichtung zur Abgasmessung geladener Teilchen, insbesondere bei einem Kraftfahrzeug, bekannt, die eine lonisierungseinrichtung mit einer Elektrodenanordnung aufweist und eine Ladungsmesseinrichtung, wobei die Elektrodenanordnung mindestens ein Elektrodenpaar mit mindestens einer Elektrode und mindestens einer Gegenelektrode aufweist. Zwischen der Elektrode und der Gegenelektrode ist ein Dielektrikum angeordnet.

Darüber hinaus ist aus der WO 03/034053 A eine weitere Vorrichtung zur Abgasmessung geladener Teilchen bekannt, die ein Heizelement in Form eines Heizmäanders aufweist, wobei das Heizelement im Bereich der Ladungsmesseinrichtung der Vorrichtung zur Abgasmessung geladener Teilchen angeordnet ist.

### Vorteile der Erfindung

Bei einer Vorrichtung zur Abgasmessung mit geladenen Teilchen, insbesondere bei einem Kraftfahrzeug, aufweisend eine lonisierungseinrichtung mit einer Elektrodenanordnung und eine Ladungsmesseinrichtung, wobei die Elektrodenanordnung mindestens ein Elektrodenpaar mit mindestens einer Elektrode und mindestens einer Gegenelektrode aufweist, wird erfindungsgemäß vorgeschlagen, dass zur Bewirkung einer dielektrisch behinderten Entladung zwischen der Elektrode und der Gegenelektrode ein Dielektrikum angeordnet ist. Dadurch ergibt sich eine kompakte und energetisch vorteilhafte Vorrichtung, mit der sich insbesondere die Abgasströmungsgeschwindigkeit und/oder die Abgasmenge messen lässt. Der Begriff des Teilchens ist dabei weit gefasst zu verstehen, wobei insbesondere Teilchen, Gasmoleküle und Ionen unter diesen Begriff fallen. Aufgabe der lonisierungseinrichtung ist es, das Abgas durch die gezielte Erzeugung freier Ladungsträger mit Ionen und/oder geladenen Molekülen und/oder Partikeln -allgemein, mit geladenen Teilchen- anzureichern. In einer in Strömungsrichtung hinter der lonisierungseinrichtung angeordneten Ladungsmesseinrichtung werden diese geladenen Teilchen, die mit dem Abgasstrom mitgeführt werden, dann nachgewiesen. Da die Ladungsmesseinrichtung allgemein geladene Teilchen nachweist, ist das Vorhandensein von Partikeln nicht erforderlich. Aufgrund der dielektrisch behinderten Entladung entsteht zwischen der Elektrode und der Gegenelektrode kein beziehungsweise nur ein vernachlässigbarer Stromfluss, so dass nur eine geringe Energie verbraucht wird. Dadurch unterscheidet sich die Erfindung insbesondere von Ladungsverfahren über einen Lichtbogen, bei denen ein erheblicher Stromfluss und Energieverbrauch entsteht. Für die Details hinsichtlich der Auswertung der Messungen wird auf die eingangs genannte Druckschrift DE 102 42 301 A1 und auf die DE 36 27 162 C2 verwiesen. Mit der vorgeschlagenen Vorrichtung kann sowohl die Flugzeit der Teilchen zwischen Ionisierungseinrichtung und Ladungsmesseinrichtung, und damit die Abgasströmungsgeschwindigkeit, als auch die Abgasvolumenströmung sehr genau bestimmt werden. Die Vorrichtung eignet sich auch für den Einsatz bei großen Volumenströmen, wie sie beispielsweise bei Nutzkraftwagen anzutreffen sind. Aufgrund der ermittelten Messwerte kann die Abgasrückführungsrate genau bestimmt werden und können die Emissionswerte von Motoren verbessert werden. Im Hinblick auf die ermöglichte Genauigkeit stellt die vorgeschlagene Vorrichtung zudem eine günstige Lösung dar.

Vorteilhafterweise sind die Ionisierungseinrichtung und/oder die Ladungsmesseinrichtung auf und/oder innerhalb mindestens eines Keramikelements ausgebildet. Auf diese Weise kann die Vorrichtung besonders gut auch in Abgasströmen mit hoher Temperatur und/oder hohem Druck eingesetzt werden. Dabei können auch die erforderlichen elektrischen Anschlussstellen auf dem Keramikelement realisiert werden, beispielsweise als Anschlusspads. Dies trägt zu einer kompakten Bauform, insbesondere als Modul, bei.

Bevorzugt sind zumindest Teile der lonisierungseinrichtung und der Ladungsmesseinrichtung auf und/oder innerhalb eines gemeinsamen Keramikelements ausgebildet. So können insbesondere die Elektrode auf einem Keramikelement und die Gegenelektrode und die Ladungsmesseinrichtung auf einem weiteren Keramikelement angeordnet werden.

Gemäß einer Weiterbildung der Erfindung sind ein erstes Keramikelement und ein dazu beabstandetes zweites Keramikelement als Abgasleitvorrichtung ausgebildet. So wird sichergestellt, dass das von der lonisierungseinrichtung aufgeladene Abgas für eine korrekte Messung zur Ladungsmesseinrichtung gelangt und nicht nach der Aufladung in erheblichem Maße in zu großem Abstand an der Ladungsmesseinrichtung vorbeiströmt.

Die Vorrichtung weist mindestens ein Heizelement, insbesondere einen Heizmäander, auf. Dadurch kann einer Verschmutzung der Vorrichtung durch Ablagerungen entgegen gewirkt werden. Wird das Heizelement als Heizmäander eingesintert, so ergibt sich neben einer besonders effektiven Beheizung zudem eine sehr robuste Bauform.

Ferner ist das Heizelement ausschließlich im Bereich der Ladungsmesseinrichtung angeordnet. Gerade im Bereich der Ladungsmesseinrichtung, insbesondere bei Influenzelektroden, sollten Verrußungen vermieden werden. Dazu wird der Bereich auf eine Temperatur oberhalb der Rußanlagerungstemperatur aufgeheizt. Es kann so eine Anlagerung beziehungsweise Kondensation von Rußteilchen vermieden werden, wodurch gerade auch Kurzschlüsse durch Ablagerungen zwischen mehreren Influenzelektroden verhindert werden.

Vorteilhafterweise erstrecken sich Elektrode und Gegenelektrode jeweils flächig. Während grundsätzlich die (Gegen-)Elektrode auch als Antenne ausgebildet sein kann, ergibt sich durch diese Ausgestaltung von Elektrode und Gegenelektrode eine besonders gute Aufladung.

Bei einer bevorzugten Ausführungsform weist die lonisierungseinrichtung einen Funkenerzeuger, insbesondere gemäß dem Zündkerzenprinzip, auf. Dadurch lassen sich auf einfache und preiswerte Weise freie Ladungsträger erzeugen. Gerade in einem Kraftfahrzeug lässt sich die Zündspannung besonders leicht bereitstellen, da der Funkenerzeuger hier auf dem gleichen Prinzip wie bei einer Zündkerze beruhen kann.

Es ist vorteilhaft, wenn die Vorrichtung in einem Abgasleitrohr angeordnet ist. Dadurch können lonisierungseinrichtung und Ladungsmesseinrichtung in vielfältiger Weise ausgestaltet werden. Durch den Einsatz des Abgasleitrohrs wird immer sichergestellt, dass der Abgasanteil mit den erzeugten Ladungsträgern auch zur Ladungsmesseinrichtung geführt wird.

Ferner betrifft die Erfindung ein Verfahren zur Abgasmessung mit geladenen Teilchen, insbesondere bei einem Kraftfahrzeug, wobei im Abgas enthaltene Teilchen mittels einer Ionisierungseinrichtung aufgeladen werden und die geladenen Teilchen mittels einer Ladungsmesseinrichtung detektiert werden und erfindungsgemäß die Teilchen durch eine dielektrisch behinderte Entladung aufgeladen werden.

Dabei ist es vorteilhaft, wenn auf der Basis eines festen Abstands zwischen lonisierungseinrichtung und Ladungsmesseinrichtung mittels einer Auswerteeinrichtung eine Strömungsgeschwindigkeit des Abgases bestimmt wird. Dazu wird die Zeit gemessen, in der die aufgeladenen Teilchen von der lonisierungseinrichtung zur Ladungsmesseinrichtung gelangen, und aus dem Quotienten des Abstands und der Zeit die Strömungsgeschwindigkeit errechnet. Alternativ oder gegebenenfalls als zusätzliche Messung ist es möglich, mehrere Messelemente, insbesondere mehrere Influenzelektroden, in der Ladungsmesseinrichtung vorzusehen. Es können dann auch die Bewegungen der geladenen Teilchen zwischen den Messelementen und/oder zwischen der Ionisierungseinrichtung und den verschiedenen Messelementen ermittelt werden. Die jeweiligen Abstände werden dabei so gewählt, dass sie einerseits ausreichend groß sind, um eine ausreichende Auflösung im Zeitbereich zu erzielen, und andererseits klein genug sind, damit auch unter Berücksichtigung von Rekombinationseffekten noch eine ausreichende Ladung, also ausreichend geladene Teilchen, zu den jeweiligen Messelementen gelangen.

Bevorzugt ist es zudem, dass die Teilchen zeitlich gepulst aufgeladen werden. Dabei wird für eine sehr kurze Zeitdauer die lonisierungseinrichtung aktiviert und gleichzeitig eine Zeitmesseinrichtung gestartet. Wird dann an der Ladungsmesseinrichtung ein Anstieg an detektierten geladenen Teilchen registriert, wird die Zeitmesseinrichtung gestoppt. So lässt sich auf besonders einfache Weise die Zeit ermitteln, in der die aufgeladenen Teilchen von der lonisierungseinrichtung zur Ladungsmesseinrichtung gelangen. Aus dem Quotient von Abstand und Zeit ergibt sich wiederum die Strömungsgeschwindigkeit. Auch hier kann die zuvor beschriebene Variante mit mehreren Messelementen durchgeführt werden.

Ferner kann die Erfindung dahingehend weitergebildet werden, dass aus den gemessenen Ladungen, die Abgasmasse ermittelt oder geschätzt wird. Aus der Höhe des gemessenen Signals kann auf die an der Ladungsmesseinrichtung vorbeigeströmte Ladungsmenge geschlossen werden. Dadurch wird auch eine quantitative Aussage bezüglich der vorbeigeströmten Ladungsträger und indirekt eine Aussage über die vorbeigeströmte Abgasmasse möglich.

### Zeichnungen

Die Erfindung wird nun anhand eines Ausführungsbeispiels näher erläutert. Dabei zeigt
Figur 1a ein erstes Ausführungsbeispiel einer Vorrichtung zur Abgasmessung mit aufgeladenen Teilchen in der Draufsicht,
Figur 1b das erste Ausführungsbeispiel in der Seitenansicht,
Figur 2 ein zweites Ausführungsbeispiel, und
Figur 3 ein drittes Ausführungsbeispiel.

### Beschreibung der Ausführungsbeispiele

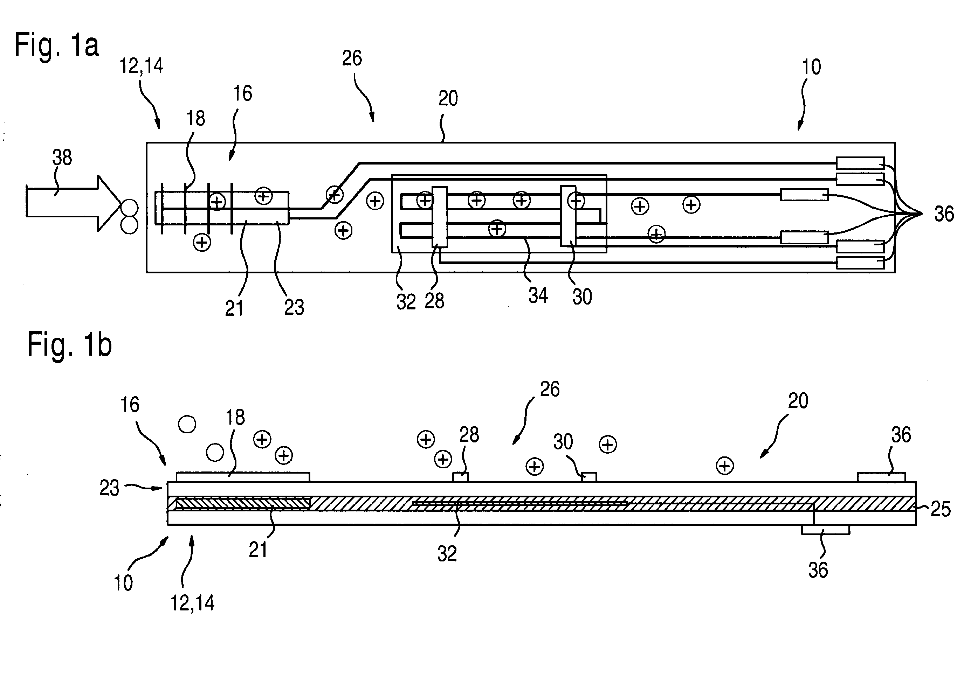

Figuren 1a und 1b zeigen eine Vorrichtung 10 zur Abgasmessung mit ionisierten Teilchen. Figur 1a zeigt die Vorrichtung 10 in der Draufsicht, und Figur 1b zeigt die Vorrichtung 10 in einer Seitenansicht. Die Teilchen sind dabei mit kleinen Kreisen symbolisch dargestellt, wobei ionisierte Teilchen zudem ein "+"-Symbol enthalten. Die Vorrichtung 10 weist eine Ionisierungseinrichtung 12 mit einer Elektrodenanordnung 14 mit einem Elektrodenpaar 16 auf. Das Elektrodenpaar 16 besteht hier aus einer antennenförmigen Elektrode 18, die auf einem Keramikelement 20 (hier ein zweilagiges Keramiksubstrat) angeordnet ist, und einer flächig ausgebildeten Gegenelektrode 21, die in einer gesinterten Schicht 25 angeordnet ist. Es ist dabei in der Figur 1b gut zu erkennen, dass Elektrode 18 und Gegenelektrode 21 voneinander beabstandet sind und dass sich zwischen ihnen ein Dielektrikum 23 befindet, welches die dielektrisch behinderte Entladung bewirkt. Die Vorrichtung 10 hat zudem eine Ladungsmesseinrichtung 26 mit einer ersten und einer zweiten Influenzelektrode 28,30. Diese sind im Bereich eines Heizelements 32 angeordnet, welches von einem Heizmäander 34 beheizt wird. Das Heizelement 32 befindet sich ebenfalls in der gesinterten Schicht 25. Die elektrischen Anschlüsse sind als Anschlusspads 36 ausgeführt.

Die Funktionsweise der Vorrichtung 10 gestaltet sich prinzipiell wie folgt. Der Abgasstrom 38 oder ein Teil davon wird über das Keramikelement 20 geleitet. Von der Elektrode 18 und der Gegenelektrode 21 werden Partikel und Gasmoleküle ionisiert beziehungsweise lonen gebildet. Diese geladenen Teilchen bewegen sich zur Ladungsmesseinrichtung 26, wo sie zunächst von der ersten Influenzelektrode 28 und dann von der zweiten Influenzelektrode 30 detektiert werden. Die Signale der Influenzelektroden 28,30 gelangen über die zugehörigen Anschlusspads 36 zu einer nicht näher dargestellten Auswerteeinrichtung. Anhand der Laufzeiten zwischen der lonisierungseinrichtung 12 und erster Influenzelektrode 28, zwischen der lonisierungseinrichtung 12 und der zweiten Influenzelektrode 30 und/oder zwischen erster und zweiter Influenzelektrode 28,30 und der entsprechenden bekannten Abstände lässt sich so die Abgasströmungsgeschwindigkeit bestimmen. Bei Bedarf kann zur Vereinfachung des Aufbaus auch auf eine der Influenzelektroden 28,30 verzichtet werden.

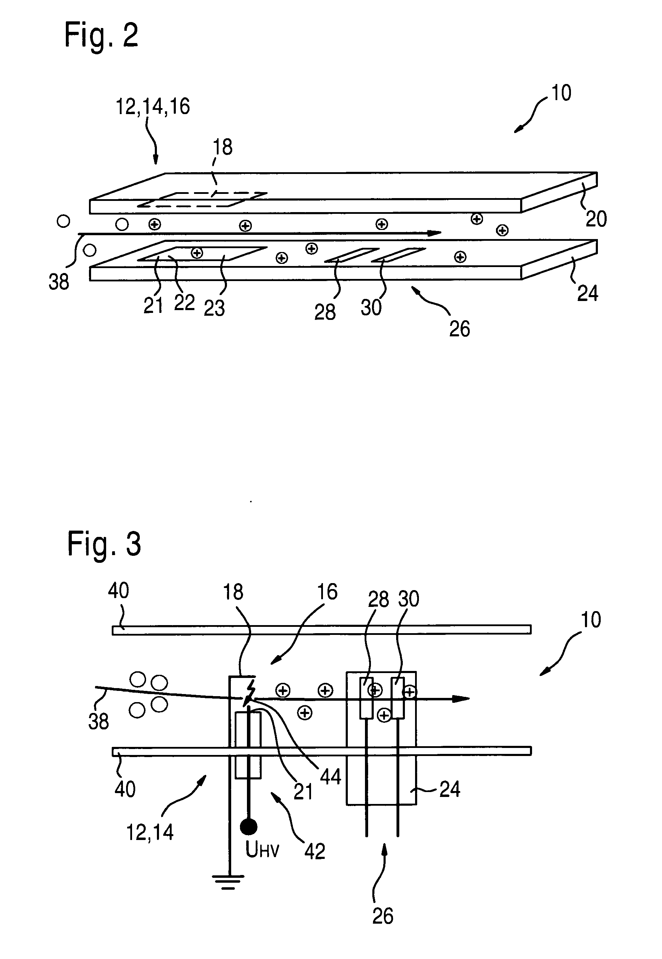

Figur 2 zeigt ein zweites Ausführungsbeispiel, welches in den grundlegenden Aspekten der Figur 1 entspricht. Es wird daher auf die dortigen Ausführungen verwiesen. Hier wurden aber die Elektrode 18 auf einem ersten Keramikelement 20 und die Gegenelektrode 21 auf einem zweiten Keramikelement 24 angeordnet. Durch die zwei im Wesentlichen parallel zueinander beabstandeten Keramikelemente 20,24 ergibt sich eine vorteilhafte Abgasführung, um das Abgas in den Bereich der Influenzelektroden 28,30 zu leiten. Die Gegenelektrode 21 wurde hier wie die Elektrode 18 flächig ausgeführt, um eine große lonisationsenergie in einem großen Zwischenraum aufbringen zu können. Außerdem ist sie mit einer isolierenden Schicht 22 überzogen.

In der Figur 3 ist ein drittes Ausführungsbeispiel dargestellt, wobei die Vorrichtung 10 in einem Abgasrohr 40 angeordnet ist. Auch hier wird für die prinzipielle Funktionsweise auf die Beschreibungen zur Figur 1 verwiesen. Die lonisationseinrichtung 12 ist hier durch einen Funkengeber 42 nach dem Prinzip einer Zündkerze realisiert. Der Funkengeber 42 wird mittels einer Hochspannung U_{HV} gepulst betrieben, so dass sich zwischen Elektrode 18 und Gegenelektrode 21 Funken 44 ausbilden. Diese Variante ist besonders kostengünstig.

## Patentansprüche

1. Vorrichtung (10) zur Abgasmessung mit geladenen Teilchen, Insbesondere bei einem Kraftfahrzeug, aufweisend eine lonisierungseinrichtung (12) mit einer Elektrodenanordnung (14) und eine Ladungsmesseinrichtung (26), wobei die Elektrodenanordnung (14) mindestens ein Elektrodenpaar (16) mit mindestens einer Elektrode (18) und mindestens einer Gegenelektrode (21) aufweist, wobei zur Bewirkung einer dielektrisch behinderten Entladung zwischen der Elektrode. (18) und der Gegenelektrode (21) ein Dielektrikum (23) angeordnet ist, wobei die Vorrichtung (10) mindestens ein Heizelement (32). insbesondere einen Heizmäander (34), aufweist, **dadurch gekennzeichnet, dass** das Heizelement (32) ausschließlich im Bereich der Ladungsmesseinrichtung (26) angeordnet ist, wobei sich die Ladungsmesseinrichtung in einem festen Abstand von der Ionisierungseinrichtung befindet.

2. Vorrichtung (10) nach Anspruch 1, **dadurch gekennzeichnet, dass** die lonisierungseinrichtung (12) und/oder die Ladungsmesseinrichtung (26) auf und/oder innerhalb mindestens eines Keramikelements (20,24) ausgebildet sind.

3. Vorrichtung (10) nach einem der vorhergehenden Ansprüche, **dadurch gekennzeichnet, dass** zumindest Teile der Ionisierungseinrichtung (12) und der Ladungsmesseinrichtung (26) auf und/oder innerhalb eines gemeinsamen Keramikelements (24) ausgebildet sind.

4. Vorrichtung (10) nach einem der vorhergehenden Ansprüche, **dadurch gekennzeichnet, dass** ein erstes Keramikelement (20) und ein dazu beabstandetes zweites Keramikelement (24) als Abgasleitvorrichtung ausgebildet sind.

5. Vorrichtung (10) nach einem der vorhergehenden Ansprüche, **dadurch gekennzeichnet, dass** sich Elektrode (18) und Gegenelektrode (21) jeweils flächig erstrecken.

6. Vorrichtung (10) nach einem der vorhergehenden Ansprüche, **dadurch gekennzeichnet, dass** die lonisierungseinrichtung (12) einen Funkenerzeuger (42), insbesondere gemäß dem Zündkerzenprinzip, aufweist.

7. Vorrichtung (10) nach einem der vorhergehenden Ansprüche, **dadurch gekennzeichnet, dass** die Vorrichtung (10) in einem Abgasleitrohr angeordnet ist.

8. Verfahren zur Abgasmessung mit geladenen Teilchen, insbesondere bei einem Kraftfahrzeug, wobei im Abgas enthaltene Teilchen mittels einer Ionisierungseinrichtung (12) aufgeladen werden und die geladenen Teilchen mittels einer Ladungsmesseinrichtung (26) detektiert werden, wobei die Teilchen durch eine dielektrisch behinderte Entladung aufgeladen werden, **dadurch gekennzeichnet, dass** eine Vorrichtung nach einem der vorhergehenden Ansprüche verwendet wird.

9. Verfahren nach Anspruch 10, **dadurch gekennzeichnet, dass** auf der Basis eines festen Abstands zwischen Ionisierungseinrichtung (12) und Ladungsmesseinrichtung (26) mittels einer Auswerteeinrichtung eine Strömungsgeschwindigkeit des Abgases (38) bestimmt wird.

10. Verfahren nach einem der vorhergehenden Ansprüche, **dadurch gekennzeichnet, dass** die Teilchen zeitlich gepulst aufgeladen werden.

11. Verfahren nach einem der vorhergehenden Ansprüche, **dadurch gekennzeichnet, dass** aus den gemessenen Ladungen die Abgasmasse ermittelt oder geschätzt wird.

## Claims

1. Apparatus (10) for measuring exhaust gas with the aid of charged particles, particularly in the case of a motor vehicle, having an ionization device (12) with an electrode arrangement (14), and a charge-measuring device (26), the electrode arrangement (14) having at least one electrode pair (16) with at least one electrode (18) and at least one counter-electrode (21), a dielectric (23) being arranged in order to effect a dielectrically impeded discharge between the electrode (18) and the counter-electrode (21), the apparatus (10) having at least one heating element (32), particularly a heating meander (34), **characterized in that** the heating element (32) is arranged exclusively in the region of the charge-measuring device (26), the charge-measuring device being located at a fixed distance from the ionization device.

2. Apparatus (10) according to Claim 1, **characterized in that** the ionization device (12) and/or the charge-measuring device (26) are formed on and/or inside at least one ceramic element (20, 24).

3. Apparatus (10) according to one of the preceding claims, **characterized in that** at least parts of the ionization device (12) and of the charge-measuring device (26) are formed on and/or inside a common ceramic element (24).

4. Apparatus (10) according to one of the preceding claims, **characterized in that** a first ceramic element (20) and a second ceramic element (24) spaced apart therefrom are formed as exhaust-gas conducting device.

5. Apparatus (10) according to one of the preceding claims, **characterized in that** the electrode (18) and counter-electrode (21) extend in planar fashion in each case.

6. Apparatus (10) according to one of the preceding claims, **characterized in that** the ionization device (12) has a spark generator (42), particularly in accordance with the sparking plug principle.

7. Apparatus (10) according to one of the preceding claims, **characterized in that** the apparatus (10) is arranged in an exhaust-gas conduction pipe.

8. Method for measuring exhaust gas with the aid of charged particles, particularly in the case of a motor vehicle, particles contained in the exhaust gas being charged by means of an ionization device (12) and the charged particles being detected by means of a charge-measuring device (26), the particles being charged by a dielectrically impeded discharge, **characterized in that** use is made of an apparatus according to one of the preceding claims.

9. Method according to Claim 8, **characterized in that** an evaluation device determines a flow speed of the exhaust gas (38) on the basis of a fixed distance between the ionization device (12) and charge-measuring device (26).

10. Method according to one of the preceding claims, **characterized in that** the particles are charged in a temporally pulsed fashion.

11. Method according to one of the preceding claims, **characterized in that** the exhaust gas mass is determined or estimated from the measured charges.

## Revendications

1. Dispositif (10) pour mesurer des gaz d'échappement avec des particules chargées, notamment dans un véhicule automobile, présentant un dispositif d'ionisation (12), avec un agencement d'électrodes (14) et un dispositif de mesure de charge (26), l'agencement d'électrodes (14) présentant au moins une paire d'électrodes (16) avec au moins une électrode (18) et au moins une contre-électrode (21), un diélectrique (23) étant prévu pour provoquer une décharge empêchée diélectriquement entre l'électrode (18) et la contre-électrode (21), le dispositif (10) présentant au moins un élément chauffant (32), notamment un filament chauffant en méandres (34), **caractérisé en ce que** l'élément chauffant (32) est disposé exclusivement dans la région du dispositif de mesure de charge (26), le dispositif de mesure de charge se trouvant à distance fixe du dispositif d'ionisation.

2. Dispositif (10) selon la revendication 1, **caractérisé en ce que** le dispositif d'ionisation (12) et/ou le dispositif de mesure de charge (26) sont réalisés sur et/ou dans au moins un élément céramique (20, 24).

3. Dispositif (10) selon l'une quelconque des revendications précédentes, **caractérisé en ce qu'**au moins des parties du dispositif d'ionisation (12) et du dispositif de mesure de charge (26) sont réalisées sur et/ou dans un élément céramique commun (24).

4. Dispositif (10) selon l'une quelconque des revendications précédentes, **caractérisé en ce qu'**un premier élément céramique (20) et un deuxième élément céramique (24) espacé du premier sont réalisés sous forme de dispositif de guidage des gaz d'échappement.

5. Dispositif (10) selon l'une quelconque des revendications précédentes, **caractérisé en ce que** l'électrode (18) et la contre-électrode (21) s'étendent chacune à plat.

6. Dispositif (10) selon l'une quelconque des revendications précédentes, **caractérisé en ce que** le dispositif d'ionisation (12) présente un générateur d'étincelles (42), notamment suivant le principe des bougies d'allumage.

7. Dispositif (10) selon l'une quelconque des revendications précédentes, **caractérisé en ce que** le dispositif (10) est disposé dans un tuyau de guidage des gaz d'échappement.

8. Procédé de mesure des gaz d'échappement avec des particules chargées, en particulier dans un véhicule automobile, dans lequel des particules contenues dans le gaz d'échappement sont chargées au moyen d'un dispositif d'ionisation (12) et les particules chargées sont détectées au moyen d'un dispositif de mesure de charge (26), les particules étant chargées par une décharge empêchée diélectriquement, **caractérisé en ce que** l'on utilise un dispositif selon l'une quelconque des revendications précédentes.

9. Procédé selon la revendication 8, **caractérisé en ce que** l'on détermine une vitesse d'écoulement du gaz d'échappement (38) sur la base d'une distance fixe entre le dispositif d'ionisation (12) et le dispositif de mesure de charge (26) au moyen d'un dispositif d'analyse.

10. Procédé selon l'une quelconque des revendications précédentes, **caractérisé en ce que** les particules sont chargées de manière puisée dans le temps.

11. Procédé selon l'une quelconque des revendications précédentes, **caractérisé en ce que** la masse de gaz d'échappement est mesurée ou estimée à partir des charges mesurées.
